# EUROPEAN PATENT SPECIFICATION

(11) **EP 4 008 885 B1**
(45) Date of publication and mention of the grant of the patent: **07.05.2025**
(21) Application number: 21212040.6
(22) Date of filing: 02.12.2021
(51) Int. Cl.: F01D 25/18

(54) **GAS TURBINE ENGINE COMBUSTOR**
GASTURBINENBRENNKAMMER
CHAMBRE DE COMBUSTION DE MOTEUR DE TURBINE À GAZ

(30) Priority: 02.12.2020 US 202017109830
(43) Date of publication of application: 08.06.2022
(73) Proprietor: PRATT & WHITNEY CANADA CORP., Longueuil, Québec J4G 1A1 (CA)
(72) Inventor: MORENKO, Oleg, (01BE5) Longueuil, J4G 1A1 (CA); PARKMAN, Kenneth, (01BE5) Longueuil, J4G 1A1 (CA)
(74) Representative: Dehns

(56) References cited:
- US-A1- 2006 249 332
- US-A1- 2010 180 417
- US-A1- 2015 052 872
- US-A1- 2015 192 299
- US-A1- 2019 249 570
- US-A1- 2019 338 676

## Description

### TECHNICAL FIELD

The application relates generally to gas turbine engines and, more particularly, to combustors thereof.

### BACKGROUND OF THE ART

A plurality of factors are considered in the design of a gas turbine engine, and these include weight, reliability, durability and cost. Moreover, the design of the individual components must often take into account the effect of growth due to temperature and/or pressure which can occur between different operating conditions, or between a given operating condition and a cooled down, inoperative condition. Differences in growth can lead to potential stress at the mechanical interface between components, and such stress can be undesirable, such as when it can cause low cycle fatigue to components or the like. In fabricated assemblies, one can sometimes replace a component which has failed due to such stresses by disassembling and replacing the component, which is typically undesirable. In the context of non-fabricated assemblies, such as where components are soldered or brazed to other components, it can occur that an entire assembly will need to be replaced due to the failure of a single one of its components, which can be even less desirable.

One of the areas of the gas turbine engine which is the most subjected to growth is within and around the combustor, where much of the combustion occurs, and which is typically also subjected to high pressures during operation (another source of growth). The high temperatures which are sustained in the combustor during operation often imposes significant constraints to the choice of materials which can be used in the components of the combustor, and can thus greatly reduce design freedom.

Such issues have been taken into consideration by engineers over the years, and have been addressed to a certain degree. But there always remains room for improvement.

US 2015/052872 discloses a prior art gas turbine engine combustor as set forth in the preamble of claim 1.

### SUMMARY

In one aspect, there is provided a gas turbine engine combustor as recited in claim 1.

In a further aspect, there is provided a method of operating a gas turbine engine as recited in claim 10.

Features of embodiments of the invention are set forth in the dependent claims.

### DESCRIPTION OF THE DRAWINGS

Reference is now made to the accompanying figures in which:
Fig. 1 is a schematic cross-sectional view of a gas turbine engine;
Fig. 2 is an oblique view showing the inside of a gas generator case in accordance with one embodiment; and
Fig. 3 is a cross-sectional view showing the mechanical interface between a service tube and the gas generator case.

### DETAILED DESCRIPTION

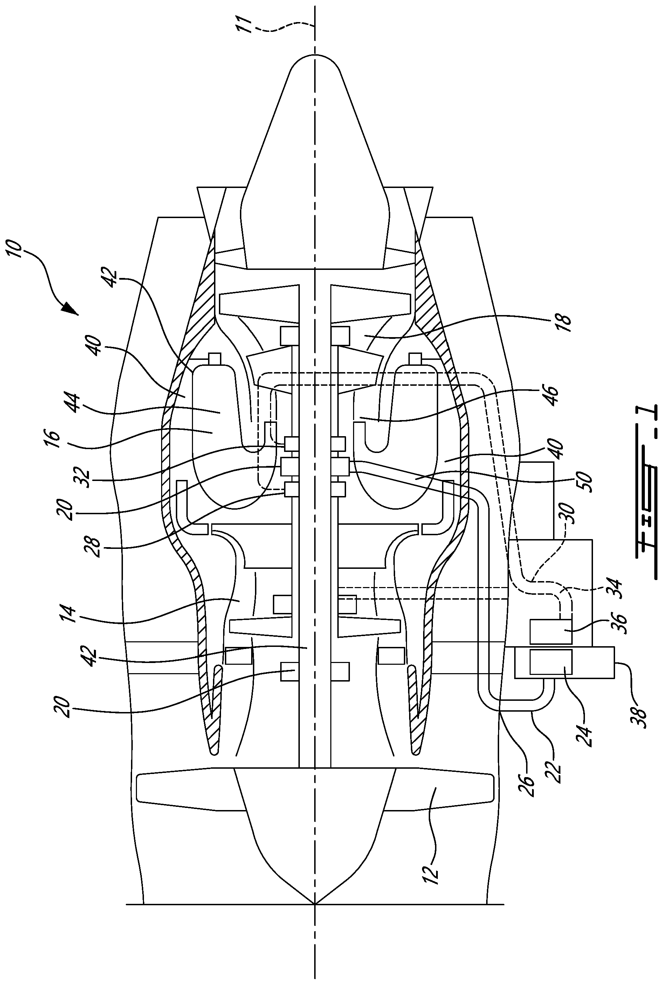

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases.

The combustor 16 is comprised of a gas generator case 40 which acts as a vessel to the pressurized air exiting the compressor section 14, and the generator case 40 houses one or more liners 42. The gas generator case 40 can thus be said to have an inlet fluidly connected to the compressor flow path. The liners 42 are typically apertured components delimiting a combustion chamber 44. The compressed air can thus enter the combustion chamber 44 through the apertures in the liner 42, a fuel nozzle can be secured to the liner 42 for introducing a jet of fuel in the combustion chamber 44, and the combustion is typically self-sustained after initial ignition. The liner 42 can be said to have an outlet 46 fluidly connected to the turbine section 18.

The compressor 14, fan 12 and turbine 18 have rotating components which can be mounted on one or more shafts 48. Bearings 20 are used to provide smooth relative rotation between a shaft 48 and casing (non-rotating component), and/or between two shafts which rotate at different speeds. An oil lubrication system 22 including an oil pump 24, sometimes referred to as a main pump, and a network of conduits and nozzles 26, is provided to feed the bearings 20 with oil. Seals 28 are used to contain the oil. A scavenge system 30 having cavities 32, conduits 34, and one or more scavenge pumps 36, is used to recover the oil, which can be in the form of an oil foam at that stage, from the bearings 20. The oil pump 24 typically draws the oil from an oil reservoir 38, and it is relatively common to use some form of air/oil separating device in the return line.

One of the contexts where differences in growth can perhaps be the most significant, is situations where components which are mechanically interfaced with one another have materially different coefficients of thermal expansion while being subjected to similar temperatures, and/or are subjected to materially different temperatures and/or pressures during operation. In this context, materially involves more than within a measurement error, and typically a level of significance in the context of the intended use in the gas turbine engine.

One of the areas which is perhaps the most sensitive to differences in growth may be the case of a service tube 50 which must extend across the combustor 16 to convey relatively cool oil to bearings 20. Indeed, in such a case, the service tube 50 may remain materially cooler than the surrounding portions of the combustor 16, such as its gas generator case 40, during normal operation due to the circulation of relatively cool oil in the service 50 tube. If the service tube 50 is cast in the gas generator case 40, it can generate stress in its vicinity during operation. If the service tube 50 is a distinct tube extending inside the cavity of the gas generator case 40, and mechanically interfaced with the gas generator case 40, and has the same coefficient of thermal expansion than the gas generator case 40, the service tube 50 can experience materially less thermal growth than the gas generator case 40. Moreover, this difference in thermal growth can be exacerbated by an additional difference in growth due to pressure. Indeed, the gas generator case 40 is pressurized during operation and the pressure can thus additionally stress its structure in an orientation of growth, at least on its radially outer wall, while the oil pressure inside the service tube 50 may not be a source of dimensional increase. It was found that in some cases, the difference in growth could reach 0.2-0.3% of the components dimensions for instance, and that this can generate a significant source of stress. Similar issues may arise in other gas turbine engine components subjected to similar circumstances.

Different approaches can be considered to address such issues. The component's mechanical interfaces can be designed with sliding joints, for instance, but this can be less than desirable in some arrangements because it can impart additional weight or costs, or affect durability, for instance, particularly when compared with a soldered or brazed mechanical interface, for instance.

It was found that in at least some embodiments, a useful approach can be to design the colder component with a material having a coefficient of thermal expansion materially higher than the coefficient of thermal expansion of the hotter. Indeed, in such cases, the greater coefficient of thermal expansion of the colder component can be harnessed to generate a greater thermal growth, and thereby partially or fully compensate for the colder temperature.

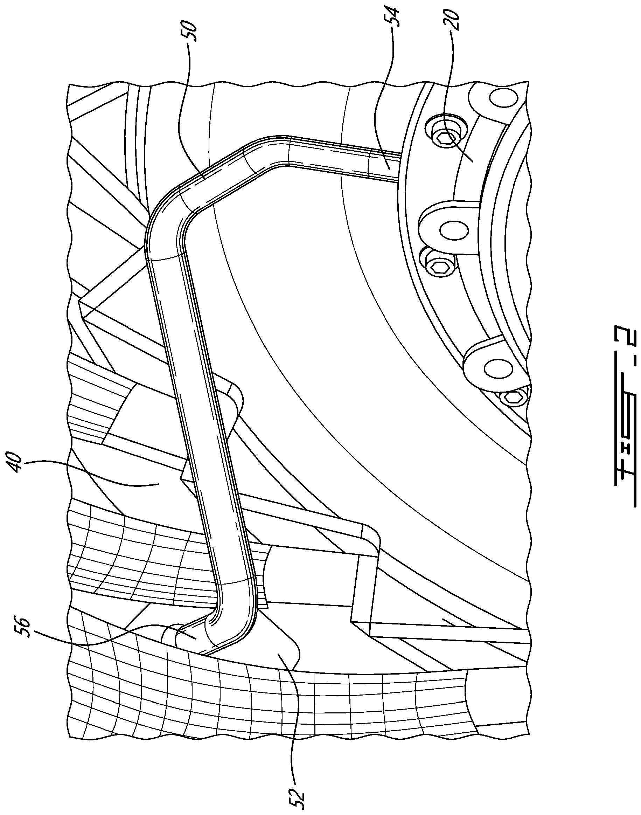

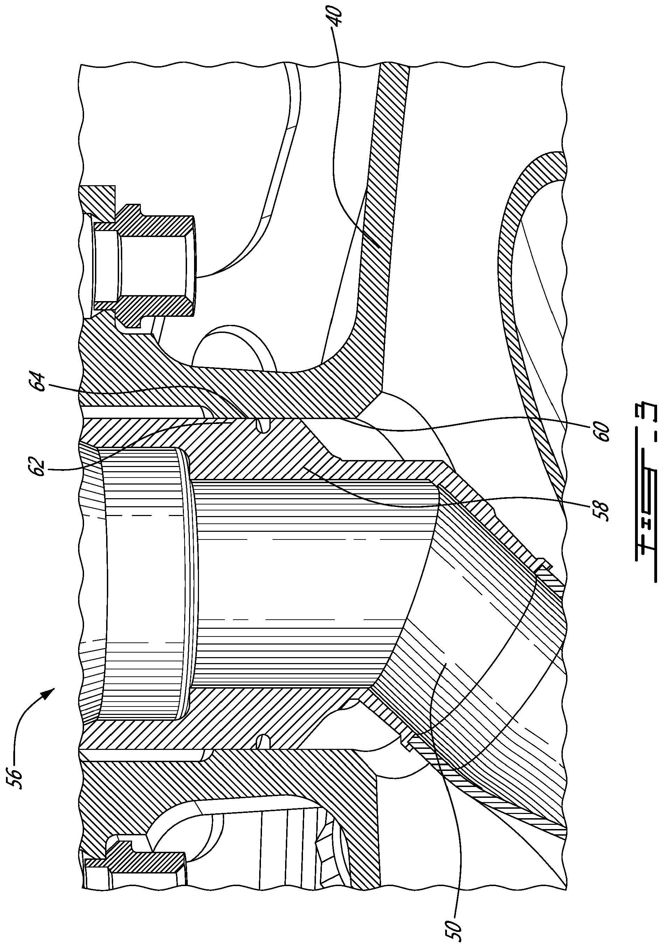

An example embodiment is presented in Figs 2 and 3. As shown in Fig. 2, a service tube 50 distinct from the structure of the gas generator case 40 and of the structure of the compressor, extending from a radially outer mechanical interface 52 with the gas generator case 40 to a radially inner mechanical interface 54 leading ultimately to one or more bearings 20. In this case, the service tube 50 and the gas generator case 40 are a non-fabricated assembly 56, as best seen in Fig. 3, with the service tube 50 inlet section 58 being provided in the form of a male component received in a female aperture 60 defined in the radially outer mechanical interface 52 of the gas generator case 40, and where the outer face 62 of the service tube 50 inlet section 58 is brazed to the inner face 64 of the gas generator case's 40 receiving aperture 60. In such a non-fabricated assembly, one can strategically select the service tube's 50 material to be a non-hardenable material, whereas the gas generator case 40 can be made of a hardenable material, in which case, the brazing can occur during the hardening of the gas generator case 40. As known in the art, hardening is a metallurgical metalworking process used to increase the hardness of a metal. A hardenable material is one which can be hardened by this metallurgical process, whereas a non-hardenable material is one for which the hardness is unaffected by this metallurgical process. If the gas generator case is intended to be hardened, which can simultaneously involve brazing the service tube, for instance, it can be preferred that the service tube be made of a material which will be unaffected by this hardening process.

The service tube 50 can be made of a first material having a first coefficient of thermal expansion, whereas the gas generator case's 40 radially outer mechanical interface 52 can be made of a second material having a second coefficient of thermal expansion. The first coefficient of thermal expansion can be greater than the second coefficient of thermal expansion in a manner to impart comparable/compatible growth notwithstanding the differences in temperature.

Indeed, the difference in coefficients of thermal expansion can be significant, such as perhaps being different by more than 5%, more than 10%, more than 15%, and perhaps around 20%.

In the context of a gas generator case 40, there can be a limited set of commercially available materials which are adapted to withstand the harsh operating conditions of the context, but there can nonetheless remain sufficient degree of freedom to achieve the goal. Indeed, the gas generator case 40 can be made of stainless steel, particularly 400 series stainless steel and notably Greek Ascoloy, which can have coefficients of thermal expansion in the order of 11-12 X 10⁻⁶ °C⁻¹, but perhaps also 300 series stainless steel, which can have coefficients of thermal expansion in the order of 10 X 10⁻⁶ °C⁻¹. The service tube can be made of Inconel, such as perhaps Inconel 718 or Inconel 625, which can have coefficients of thermal expansion in the order of 13 X 10⁻⁶ °C⁻¹ to 16 X 10⁻⁶ °C⁻¹, for instance. A typical difference in the coefficient of thermal expansion of stainless steel and Inconel can be around 20%, for instance.

In situations where the difference of thermal expansion coefficients is deemed too great given the expected temperature differences, i.e. where the difference of thermal expansion coefficients between Inconel and stainless steel would tend for the Inconel component to overcompensate for its lower temperature, it can be suitable to pre-stress the lower temperature component in the orientation opposite to the expected growth during assembly, for instance.

Accordingly, during operation of the gas turbine engine 10, the following processes can occur simultaneously : A) the air is pressurized by the compressor; B) the compressed air is mixed with fuel and ignited in the combustor 16 to generate a an annular stream of hot combustion gasses; C) energy from the hot combustion gasses is extracted using a turbine 18, and used to drive the compressor 14 via a rotary shaft 48 supported by bearings 20; D) the bearings 20 are supplied with oil via a service tube 50 which extends inside the gas generator case 40 of the combustor 16, the oil maintaining the service tube 50 at a temperature lower than the surrounding temperature in the gas generator case 40; E) the colder service tube 50 is maintained in a state of thermal growth compatible with the state of growth of the hotter gas generator case 40, due to a greater coefficient of thermal expansion of the service tube 50.

The embodiments described in this document provide non-limiting examples of possible implementations of the present technology. Upon review of the present disclosure, a person of ordinary skill in the art will recognize that changes may be made to the embodiments described herein without departing from the scope of the present technology.

For example, while an example embodiment presented above was applied to a service tube extending in a gas generator case, outside a liner, it will be understood that other embodiments can be applied to other components facing similar or otherwise comparable issues. In one embodiment, the gas generator case can include both a radially outer wall and a radially inner wall, but in alternate embodiments, the gas generator case can include solely a radially outer wall, or a portion of a radially outer wall, while the radially inner wall can be formed by a different component, possibly made of a different material.

In one embodiment, the service tube can be made integrally of a single material. In other embodiments, the service tube can have a body made of a first material, and another component, such as a coupler, made of another material. Typically, a key aspect will be that a portion of the service tube which has a significant effect in the process of thermal growth be made of a material having a higher coefficient of thermal expansion, whereas other portions of the service tube can be made of a material having the same coefficient of thermal expansion than the gas generator case component the service tube mechanically interfaces with, for instance.

Moreover, it will be noted that while the example presented above and illustrated used the example context of a turbofan engine, other embodiments can be applied to other contexts such as a turboprop or turboshaft gas turbine engine for instance, or any other engine subjected to comparable issues and which could benefit from the proposed solution.

## Claims

1. A gas turbine engine combustor (16) comprising:
a gas generator case (40) having a first coefficient of thermal expansion, the gas generator case (40) acting as a vessel to pressurized air exiting a compressor section;
a liner (42) inside the gas generator case (40), the gas generator case (40) housing the liner (42), the liner (42) delimiting a combustion chamber (44);
a service tube (50) having a second coefficient of thermal expansion, the second coefficient of thermal expansion being higher than the first coefficient of thermal expansion, **characterised in that**
the service tube (50) extends inside the gas generator case (40), outside the liner (42); and
the service tube (50) is brazed or soldered to an aperture (60) formed in the gas generator case (40).

2. The combustor (16) of claim 1, wherein the service tube (50) is configured to convey oil to bearings (20) radially across the gas generator case (40).

3. The combustor (16) of claim 1 or 2, wherein the second coefficient of thermal expansion is at least 10% higher than the first coefficient of thermal expansion.

4. The combustor (16) of claim 3, wherein the second coefficient of thermal expansion is at least 15% higher than the first coefficient of thermal expansion.

5. The combustor (16) of claim 4, wherein the second coefficient of thermal expansion is about 20% higher than the first coefficient of thermal expansion.

6. The combustor (16) of any preceding claim, wherein the service tube (50) is made of a material which is non-hardenable.

7. The combustor (16) of any preceding claim, wherein the gas generator case (40) has a radially outer wall made of stainless steel having the first coefficient of thermal expansion, and the service tube (50) has a main body between two couplers, the main body being made of Inconel and having the second coefficient of thermal expansion.

8. The combustor (16) of claim 7, wherein the stainless steel is Greek Ascoloy and the Inconel is Inconel 718.

9. The combustor (16) of any preceding claim, wherein the gas generator case (40) has an inlet configured for fluidly connecting to a compressor outlet, and an outlet (46) configured for fluidly connecting to a turbine inlet.

10. A method of operating a gas turbine engine (10), the method comprising, simultaneously :
pressurizing air using a compressor (14),
mixing the compressed air with fuel and igniting for generating an annular stream of hot combustion gases in a combustor (16),
extracting energy from the combustion gasses using a turbine (18), the turbine (18) connected to the compressor (14) via a rotary shaft (48) supported by bearings (20);
supplying said bearings (20) with oil via a service tube (50) extending across a gas generator case (40) of the combustor (14), said service tube (50) being maintained at a lower temperature than the gas generator case (40) by the oil, the gas generator case (40) acting as a vessel to pressurized air exiting a compressor section, wherein said service tube (50) is brazed or soldered to an aperture (60) formed in the gas generator case (40);
maintaining the colder service tube (50) in a state of thermal growth compatible with the state of growth of the hotter gas generator case (40), due to a greater coefficient of thermal expansion of the service tube (50) than of the gas generator case (40).

11. A gas turbine engine (10) comprising, in serial flow communication, a compressor (14) for pressurizing air, the combustor (16) of any preceding claim for mixing the compressed air with fuel and igniting for generating an annular stream of hot combustion gases, and a turbine (18) driving the compressor via a shaft (48) using energy extracted from the hot combustion gases, the shaft being supported by bearings (20).

## Patentansprüche

1. Gasturbinenbrennkammer (16), umfassend:
ein Gasgeneratorgehäuse (40), das einen ersten Wärmeausdehnungskoeffizienten aufweist, wobei das Gasgeneratorgehäuse (40) als Behälter für aus einem Verdichterabschnitt austretende verdichtete Luft fungiert;
eine Auskleidung (42) im Inneren des Gasgeneratorgehäuses (40), wobei das Gasgeneratorgehäuse (40) die Auskleidung (42) aufnimmt und die Auskleidung (42) einen Brennraum (44) abgrenzt;
ein Versorgungsrohr (50), das einen zweiten Wärmeausdehnungskoeffizienten aufweist, wobei der zweite Wärmeausdehnungskoeffizient höher ist als der erste Wärmeausdehnungskoeffizient, **dadurch gekennzeichnet, dass**
sich das Versorgungsrohr (50) innerhalb des Gasgeneratorgehäuses (40) außerhalb der Auskleidung (42) erstreckt; und
das Versorgungsrohr (50) an eine im Gasgeneratorgehäuse (40) gebildete Öffnung (60) hart- oder weichgelötet ist.

2. Brennkammer (16) nach Anspruch 1, wobei das Versorgungsrohr (50) dazu konfiguriert ist, Öl radial über das Gasgeneratorgehäuse (40) zu Lagern (20) zu leiten.

3. Brennkammer (16) nach Anspruch 1 oder 2, wobei der zweite Wärmeausdehnungskoeffizient mindestens 10 % höher ist als der erste Wärmeausdehnungskoeffizient.

4. Brennkammer (16) nach Anspruch 3, wobei der zweite Wärmeausdehnungskoeffizient mindestens 15 % höher ist als der erste Wärmeausdehnungskoeffizient.

5. Brennkammer (16) nach Anspruch 4, wobei der zweite Wärmeausdehnungskoeffizient mindestens 20 % höher ist als der erste Wärmeausdehnungskoeffizient.

6. Brennkammer (16) nach einem der vorhergehenden Ansprüche, wobei das Versorgungsrohr (50) aus einem Material hergestellt ist, das nicht härtbar ist.

7. Brennkammer (16) nach einem der vorhergehenden Ansprüche, wobei das Gasgeneratorgehäuse (40) eine radial äußere Wand aufweist, die aus Edelstahl, das den ersten Wärmeausdehnungskoeffizienten aufweist, hergestellt ist, und das Versorgungsrohr (50) einen Hauptkörper zwischen zwei Kopplern aufweist, wobei der Hauptkörper aus Inconel hergestellt ist und den zweiten Wärmeausdehnungskoeffizienten aufweist.

8. Brennkammer (16) nach Anspruch 7, wobei der Edelstahl Greek Ascoloy ist und das Inconel Inconel 718 ist.

9. Brennkammer (16) nach einem der vorhergehenden Ansprüche, wobei das Gasgeneratorgehäuse (40) einen Einlass, der zur Fluidverbindung mit einem Verdichterauslass konfiguriert ist, und einen Auslass (46), der zur Fluidverbindung mit einem Turbineneinlass konfiguriert ist, aufweist.

10. Verfahren zum Betreiben eines Gasturbinentriebwerks (10), wobei das Verfahren die folgenden gleichzeitigen Schritte umfasst:
Verdichten von Luft mittels eines Verdichters (14),
Mischen der verdichteten Luft mit Kraftstoff und Zünden zum Erzeugen eines ringförmigen Stroms heißer Verbrennungsgasen in einer Brennkammer (16),
Entziehen von Energie aus den Verbrennungsgasen unter Verwendung einer Turbine (18), wobei die Turbine (18) über eine von Lagern (20) getragene Drehwelle (48) mit dem Verdichter (14) verbunden ist;
Versorgen der Lager (20) mit Öl über ein Versorgungsrohr (50), das sich über ein Gasgeneratorgehäuse (40) der Brennkammer (14) erstreckt, wobei das Versorgungsrohr (50) durch das Öl auf einer niedrigeren Temperatur als das Gasgeneratorgehäuse (40) gehalten wird und das Gasgeneratorgehäuse (40) als Behälter für aus einem Verdichterabschnitt austretende verdichtete Luft fungiert, wobei das Versorgungsrohr (50) an eine im Gasgeneratorgehäuse (40) ausgebildete Öffnung (60) hart- oder weichgelötet ist;
Halten des kälteren Versorgungsrohrs (50) in einem Zustand thermischer Ausdehnung, der mit dem Ausdehnungszustand des heißeren Gasgeneratorgehäuses (40) kompatibel ist, aufgrund eines größeren Wärmeausdehnungskoeffizienten des Versorgungsrohrs (50) als des Gasgeneratorgehäuses (40).

11. Gasturbinentriebwerk (10), das in serieller Strömungsverbindung einen Verdichter (14) zum Verdichten von Luft, die Brennkammer (16) nach einem der vorhergehenden Ansprüche zum Mischen der verdichteten Luft mit Kraftstoff und Zünden zum Erzeugen eines ringförmigen Stroms heißer Verbrennungsgase und eine Turbine (18) umfasst, die den Verdichter über eine Welle (48) unter Verwendung von Energie antreibt, die den heißen Verbrennungsgasen entzogen wird, wobei die Welle durch Lager (20) getragen wird.

## Revendications

1. Dispositif de combustion de moteur à turbine à gaz (16) comprenant :
un boîtier de générateur de gaz (40) présentant un premier coefficient de dilatation thermique, le boîtier de générateur de gaz (40) agissant comme un récipient pour l'air sous pression sortant d'une section de compresseur ;
une chemise (42) à l'intérieur du boîtier du générateur de gaz (40), le boîtier du générateur de gaz (40) logeant la chemise (42), la chemise (42) délimitant une chambre de combustion (44) ;
un tube de service (50) présentant un second coefficient de dilatation thermique, le second coefficient de dilatation thermique étant supérieur au premier coefficient de dilatation thermique, **caractérisé en ce que**
le tube de service (50) se prolonge à l'intérieur du boîtier du générateur de gaz (40), à l'extérieur de la chemise (42) ; et
le tube de service (50) est brasé ou soudé à une ouverture (60) formée dans le boîtier du générateur de gaz (40).

2. Chambre de combustion (16) selon la revendication 1, dans laquelle le tube de service (50) est configuré pour transporter l'huile vers les paliers (20) radialement à travers le boîtier du générateur de gaz (40).

3. Chambre de combustion (16) selon la revendication 1 ou 2, dans laquelle le second coefficient de dilatation thermique est au moins 10 % supérieur au premier coefficient de dilatation thermique.

4. Chambre de combustion (16) selon la revendication 3, dans laquelle le second coefficient de dilatation thermique est au moins 15 % supérieur au premier coefficient de dilatation thermique.

5. Chambre de combustion (16) selon la revendication 4, dans laquelle le second coefficient de dilatation thermique est au moins environ 20 % supérieur au premier coefficient de dilatation thermique.

6. Chambre de combustion (16) selon l'une quelconque des revendications précédentes, dans laquelle le tube de service (50) est constitué d'un matériau non durcissable.

7. Chambre de combustion (16) selon l'une quelconque des revendications précédentes, dans laquelle le boîtier du générateur de gaz (40) présente une paroi radialement extérieure en acier inoxydable présentant le premier coefficient de dilatation thermique, et le tube de service (50) présente un corps principal entre deux coupleurs, le corps principal étant constitué d'Inconel et présentant le second coefficient de dilatation thermique.

8. Chambre de combustion (16) selon la revendication 7, dans laquelle l'acier inoxydable est l'Ascoloy grec et l'Inconel est l'Inconel 718.

9. Chambre de combustion (16) selon l'une quelconque des revendications précédentes, dans laquelle le boîtier de générateur de gaz (40) présente une entrée configurée pour se connecter fluidiquement à une sortie de compresseur, et une sortie (46) configurée pour se connecter fluidiquement à une entrée de turbine.

10. Procédé de fonctionnement d'un moteur à turbine à gaz (10), le procédé comprenant, simultanément :
pressurisation de l'air à l'aide d'un compresseur (14),
le mélange d'air comprimé avec du carburant et enflammé pour générer un flux annulaire de gaz de combustion chaud dans la chambre de combustion (16),
l'extraction de l'énergie des gaz de combustion à l'aide d'une turbine (18), la turbine (18) étant reliée au compresseur (14) par l'intermédiaire d'un arbre rotatif (48) supporté par des paliers (20) ;
l'alimentation desdits paliers (20) en huile via un tube de service (50) se prolongeant à travers un boîtier de générateur de gaz (40) de la chambre de combustion (14), ledit tube de service (50) étant maintenu à une température inférieure à celle du boîtier de générateur de gaz (40) par l'huile, le boîtier de générateur de gaz (40) agissant comme un récipient pour l'air sous pression sortant d'une section de compresseur, dans ledit ledit tube de service (50) étant brasé ou soudé à une ouverture (60) formée dans le boîtier de générateur de gaz (40) ;
le maintien du tube de service plus froid (50) dans un état de croissance thermique compatible avec l'état de croissance du boîtier de générateur de gaz plus chaud (40), en raison d'un coefficient de dilatation thermique plus grand du tube de service (50) que du boîtier de générateur de gaz (40).

11. Moteur à turbine à gaz (10) comprenant, en communication d'écoulement en série, un compresseur (14) pour pressuriser l'air, la chambre de combustion (16) selon l'une quelconque des revendications précédentes pour mélanger l'air comprimé avec du carburant et allumer pour générer un flux annulaire de gaz de combustion chauds, et une turbine (18) entraînant le compresseur via un arbre (48) utilisant l'énergie extraite des gaz de combustion chauds, l'arbre étant supporté par des paliers (20).
